# FASCICULE DE BREVET EUROPEEN

(11) **EP 2 452 388 B1**
(45) Date de publication et mention de la délivrance du brevet: **05.06.2013**
(21) Numéro de dépôt: 10752361.5
(22) Date de dépôt: 09.07.2010
(51) Int. Cl.: H01M 8/04

(54) **MÉTHODE ET DISPOSITIF POUR AUGMENTER LA DURÉE DE VIE D'UNE PILE À COMBUSTIBLE À MEMBRANE ÉCHANGEUSE DE PROTONS**
VERFAHREN UND VORRICHTUNG ZUR ERHÖHUNG DER LEBENSDAUER EINER PROTONENAUSTAUSCHMEMBRAN-BRENNSTOFFZELLE
METHOD AND DEVICE FOR INCREASING THE LIFESPAN OF A PROTON EXCHANGE MEMBRANE FUEL CELL

(30) Priorité: 09.07.2009 FR 0954767
(43) Date de publication de la demande: 16.05.2012
(73) Titulaire: Commissariat à l'Énergie Atomique et aux Énergies Alternatives, 75015 Paris (FR)
(72) Inventeur: FRANCO, Alejandro, F-38320 Eybens (FR); LEMAIRE, Olivier, F-38490 Les Abrets (FR)
(74) Mandataire: Vuillermoz, Bruno
(86) Numéro de dépôt international: PCT/FR2010/051458
(87) Numéro de publication internationale: WO 2011/004134

(56) Documents cités:
- EP-A1- 1 460 704
- EP-A2- 0 692 835
- JP-A- 2007 053 012
- JP-A- 2009 181 810
- US-A1- 2004 126 629
- FRANCO A A ET AL: "Impact of carbon monoxide on PEFC catalyst carbon support degradation under current-cycled operating conditions" ELECTROCHIMICA ACTA, ELSEVIER SCIENCE PUBLISHERS, BARKING, GB, vol. 54, no. 22, 1 septembre 2009 (2009-09-01), pages 5267-5279, XP026252522 ISSN: 0013-4686 [extrait le 2009-04-09] cité dans la demande

## Description

### DOMAINE DE L'INVENTION

La présente invention se situe dans le domaine des piles à combustible à membrane échangeuse de protons (« *Proton Exchange Membrane Fuel Cell* ») bien connues sous l'acronyme PEMFC.

Elle propose une solution permettant de limiter le phénomène de corrosion du support catalytique carbone qui se produit à la cathode de telles piles, et ainsi de prolonger leur durée de vie.

Plus précisément, la présente invention repose sur une inversion du fonctionnement de la pile.

### ETAT ANTERIEUR DE LA TECHNIQUE

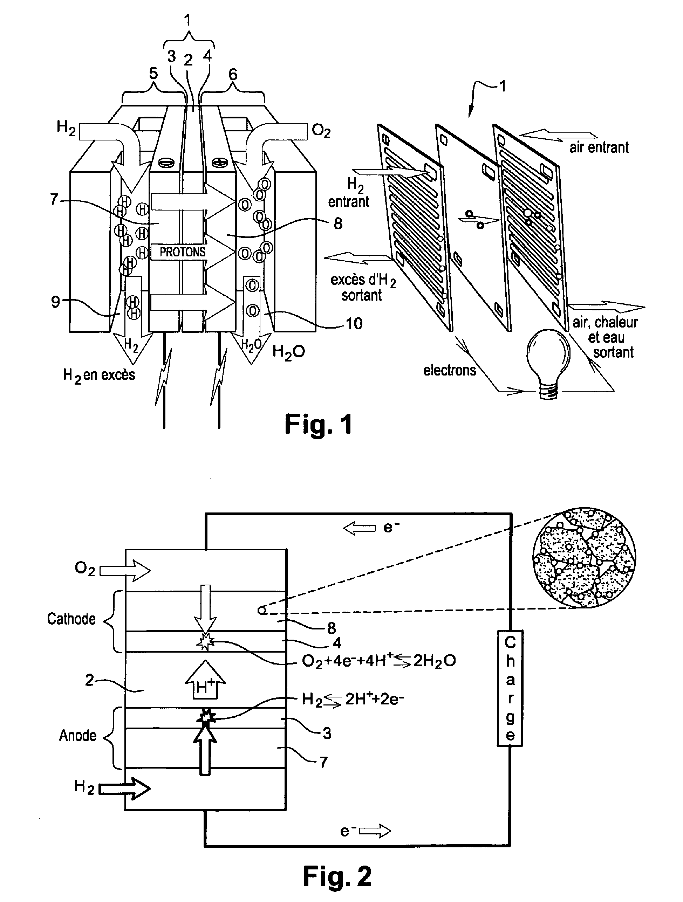

Les PEMFC sont des générateurs de courant dont le principe de fonctionnement, illustré à la figure 1, repose sur la conversion de l'énergie chimique en énergie électrique, par réaction catalytique de l'hydrogène et de l'oxygène.

Les assemblages membrane-électrodes ou AME **1**, appelés communément coeur de pile, constituent les éléments de base des PEMFC. Ils sont composés d'une membrane polymère **2** et de couches catalytiques **3**, **4** présentes d'un côté et de l'autre de la membrane **2** et constituant respectivement l'anode et la cathode.

La membrane **2** permet donc de séparer les compartiments anodique **5** et cathodique **6**. Les couches catalytiques **3**, **4** sont généralement constituées de nano-particules de platine supportées par des agrégats de carbone. Des couches de diffusion gazeuse **7**, **8** (tissu de carbone, feutre...) sont disposées de part et d'autre de l'AME 1 pour assurer la conduction électrique, la répartition homogène des gaz réactifs et l'évacuation de l'eau produite par la réaction. Un système de canaux **9**, **10** placé de chaque côté de l'AME amène les gaz réactifs et évacue vers l'extérieur l'eau et les gaz en excès.

A l'anode **3**, la décomposition de l'hydrogène adsorbé sur le catalyseur produit des protons H⁺ et des électrons e⁻. Les protons traversent ensuite la membrane polymère **2** avant de réagir avec l'oxygène à la cathode **4**. La réaction des protons avec l'oxygène à la cathode conduit à la formation d'eau et à la production de chaleur (Figure 2).

L'amélioration de la durée de vie des PEMFC constitue un enjeu majeur pour l'utilisation et le développement des piles pour le marché grand public. C'est pourquoi la mise en évidence et la compréhension des phénomènes de vieillissement du coeur de telles piles sont aujourd'hui essentielles.

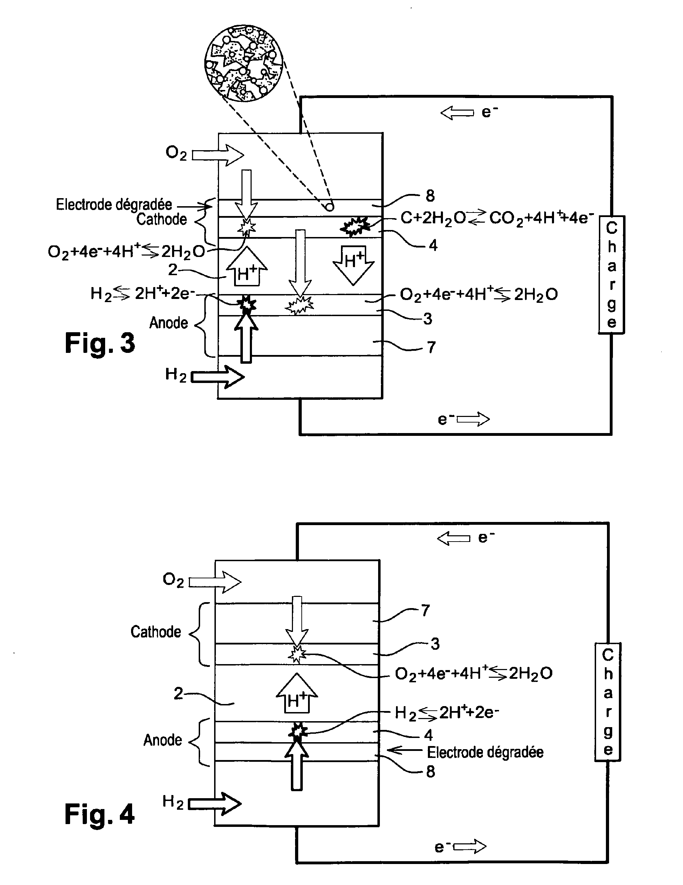

Il a été observé que la dégradation des matériaux des électrodes concerne surtout la couche active cathodique **4** (Figure 3). La corrosion du support catalytique carbone à la cathode, mécanisme bien connu, est particulièrement néfaste pour la pile.

Le support carbone s'oxyde selon la réaction suivante :

*C* + *2H₂0* ⇄ *C0₂* + 4*H*⁺ + 4*e⁻* (1)

Cette dégradation est accentuée lorsque la pile est soumise à des cycles de puissance (J. P. Meyers et R. M. Darling J. Electrochem. Soc., 153 (8), A1432, 2006).

Le potentiel de cette réaction (1) est d'environ 0,2 V/ENH. Etant donné que le potentiel cathodique d'une pile est généralement supérieur à 0,2 V, cette réaction a toujours lieu.

Par ailleurs, l'oxygène présent à l'anode **3** est normalement réduit par l'hydrogène dans le compartiment anodique. Toutefois, lors des phases d'arrêt/démarrage, de cycles de puissance, de la formation des bouchons d'eau, de l'arrêt de l'alimentation d'hydrogène, l'hydrogène n'est pas suffisant pour atteindre l'oxygène. Lors de ces phases, l'oxygène encore présent a recours à d'autres sources de protons et, en particulier, à ceux produits par l'oxydation du carbone cathodique. L'oxygène présent à l'anode **3** agit donc comme une pompe à protons (« effet pompe à protons ») qui accentue la corrosion du carbone au niveau de la couche catalytique cathodique **4**, et la réaction (1) est alors fortement déplacée vers la droite (Figure 3):

*C* + 2*H₂O* ⇄ *CO₂* + 4*H*⁺ + 4*e⁻* (2)

La dégradation du platine à la cathode participe aussi à la diminution des performances de la pile. L'un des mécanismes de dégradation concerne l'oxydation, la dissolution et la recristallisation du platine.

La maturation électrochimique est un autre mécanisme de dégradation du platine qui conduit à une augmentation de la taille des particules de platine.

D'autre part, la dégradation du support carbone cathodique induit le détachement des particules de platine (A. A. Franco et M. Gérard J. Electrochem. Soc., 155 (4), B367, 2008) (Y. Shao, G. Yin et Y. Gao J. Power Sources., 171, 558, 2007).

Des méthodes pour augmenter la durée de vie des piles à combustible ont été proposées.

Ainsi, une solution technique pour limiter la corrosion du carbone à la cathode, décrite dans le document JP 2006-278190, consiste à introduire du dioxyde de carbone (CO₂) dans l'air, à la cathode, et à contrôler sa quantité.

Plus récemment, le document FR 2 925 229 décrit une solution basée sur une diminution périodique des températures de la pile et des humidificateurs pendant quelques heures, de manière à maintenir une humidité relative stable. Cette solution permet effectivement d'augmenter significativement la durée de vie des piles mais nécessite un dispositif de contrôle de la température.

Par ailleurs, l'introduction d'un composé chimique en faible quantité dans l'hydrogène (à l'anode), comme le CO, permet d'un part de limiter d'effet « pompe à protons » et donc de diminuer le phénomène de corrosion du carbone cathodique, et d'autre part de limiter la dégradation du polymère conducteur protonique. La durée de vie de la pile est également augmentée de manière significative (A. A. Franco, M. Guinard, B. Barthe et O. Lemaire *Electrochimica Acta.,* **54**, 5267-5279, 2009).

US 2004/126629 décrit un procédé de fonctionnement d'une pile à combustible comprenant au moins une étape d'inversion de l'alimentation en gaz des électrodes.

### EXPOSE DE L'INVENTION

La présente invention s'inscrit dans la recherche de nouvelles solutions techniques permettant de limiter la corrosion du carbone à la cathode dans les PEMFC, et ainsi de prolonger leur durée de vie.

Pour l'essentiel, la présente invention propose d'inverser le fonctionnement de la pile. La détérioration des électrodes n'étant pas symétrique, l'inversion permet d'une part, de ménager la cathode détériorée qui fonctionne alors correctement en tant qu'anode, et d'autre part, d'utiliser l'anode non affectée comme une nouvelle cathode. Il apparaît clairement que la présente invention constitue une solution technique peu coûteuse et simple à mettre en oeuvre.

Ainsi, la présente invention concerne un procédé d'utilisation d'une pile à combustible de type PEFMC consistant à réaliser au moins une inversion du fonctionnement de la pile au cours de son utilisation. Selon l'objet de la revendication 1.

Plus précisément, la pile étant composée d'une membrane polymère et d'électrodes, à savoir une anode et une cathode, il est préconisé d'échanger le rôle respectif de ces électrodes. En pratique et suite à cette inversion, l'électrode qui jouait le rôle d'anode devient la cathode et réciproquement, l'électrode qui jouait le rôle de cathode devient l'anode.

Ainsi et selon un premier aspect, l'invention concerne un procédé d'utilisation d'une pile à combustible de type PEFMC, composée d'une membrane polymère et d'électrodes présentes d'un côté et de l'autre de la membrane, qui comprend les étapes suivantes :
- mesure des performances initiales de la pile;
- suivi des performances de la pile au cours du temps ;
- inversion des électrodes correspondant à l'anode et à la cathode, respectivement, au cours de l'utilisation, lorsqu'un seuil prédéterminé des performances est atteint.

Dans le cadre de l'invention, on entend avantageusement par « performances » le potentiel (U) de la pile.

Cette opération d'inversion peut être répétée jusqu'à collapse de la pile, c'est-à-dire l'effondrement du potentiel.

Selon un premier mode de réalisation, le fonctionnement de la pile est inversé grâce à un inversement physique de la pile. Il s'agit donc d'échanger physiquement les électrodes, c'est-à-dire un déplacement au moins partiel du dispositif. En pratique, il s'agit de démonter la pile et de retourner le coeur de pile (assemblage AME), puis de refermer la pile.

Alternativement et selon un second mode de réalisation, il s'agit d'inverser la nature des gaz alimentant chacune de ces électrodes selon le procédé de la revendication 1. Ainsi, il est connu que l'anode est alimentée en hydrogène (carburant) et que la cathode est alimentée en air ou en oxygène (comburant). En contrôlant la nature des gaz envoyés à chacune de ces électrodes, il est donc possible de fixer leur rôle de cathode ou d'anode et de l'échanger. De manière avantageuse, lorsque c'est l'alimentation en gaz qui est échangée, le système d'alimentation est nettoyé avant l'inversion des gaz, avantageusement par circulation dans le système d'un gaz neutre.

Grâce à cette inversion, l'activité catalytique fortement diminuée à la cathode est alors améliorée. Le fait d'inverser les électrodes de la pile agit comme une régénération. La cathode fortement dégradée devient alors l'anode. Cette nouvelle configuration est tout à fait adaptée à une poursuite optimisée du fonctionnement de la pile :
- La diminution de la surface active de la nouvelle anode n'a pas de conséquence puisqu'un très faible chargement en catalyseur peut assurer l'oxydation de l'hydrogène.
- D'autre part, l'ouverture et l'augmentation des porosités de la nouvelle couche active anodique, due à la corrosion du support carbone, ainsi que l'augmentation de la taille des grains de Pt permet de faire réagir l'oxygène présent à l'anode plus facilement avec l'hydrogène et de diminuer les phénomènes d'appauvrissement en hydrogène à la nouvelle anode. L'effet « pompe à protons » est alors limité.

Ainsi, il a été observé dans le cadre de la présente invention que pour une pile à combustible dont le chargement en catalyseur à l'anode et à la cathode est identique et lorsque l'électrolyte conducteur protonique est peu affecté par le vieillissement, la durée de vie de la pile peut être au moins doublée.

Il est proposé de réaliser au moins une étape d'inversion au cours de l'utilisation de la pile. Avantageusement, l'inversion est répétée, c'est-à-dire qu'elle est réalisée au moins deux fois au cours de l'utilisation de la pile.

Le moment choisi pour l'inversion peut être déterminé de différentes manières :
- lorsque la baisse des performances de la pile atteint un seuil prédéterminé, avantageusement une baisse (ou perte) de 20% des performances initiales de la pile. Alternativement, on peut attendre la chute des performances de la pile, c'est-à-dire que le potentiel collapse (U = 0).
   Ce mode de réalisation, préféré dans le cadre de la présente invention, nécessite un suivi du potentiel de la pile en fonction du temps. De manière privilégiée, la pile est donc reliée à un système de mesure du potentiel. La mesure du potentiel en temps réel peut être réalisée en continu ou à intervalles de temps prédéterminés, réguliers ou non. Dans le cas d'un fonctionnement sous gaz purs, cette mesure peut être réalisée toutes les dix minutes, voire toutes les heures. En revanche dans le cas de l'utilisation d'un gaz (combustible ou carburant) impur, il est préférable d'augmenter la fréquence des mesures, la présence des impuretés pouvant entraîner une chute rapide des performances. La mesure du potentiel est alors avantageusement réalisée au minimum toutes les minutes.
- alternativement, au bout d'un temps de fonctionnement prédéterminé de la pile, avantageusement après quelques centaines d'heures de fonctionnement, avantageusement autour de 500 heures de fonctionnement.

Comme déjà dit, au moins une inversion est réalisée. Toutefois, il peut être envisagé que l'inversion soit répétée à plusieurs reprises et donc répétitive, éventuellement de manière aléatoire ou en appliquant l'un et/ou l'autre des critères énoncés ci-dessus (en fonction du potentiel ou du temps). Les valeurs seuil appliquées peuvent rester constantes tout au long de l'utilisation ou varier.

En pratique, l'inversion de l'alimentation en gaz des électrodes peut être réalisée grâce à la disposition de la pile sur une plate-forme rotative. Il faut alors désolidariser la pile de son système d'alimentation, par exemple par l'intermédiaire de raccords rapides. La plate forme entraîne alors la pile dans un demi-tour afin que la cathode se trouve en position d'anode et que l'anode se trouve en position de cathode.

Alternativement, chaque électrode est dotée d'un système double d'alimentation en gaz et avantageusement d'un moyen de contrôle de cet approvisionnement. Ainsi, chacune peut être alimentée en carburant, notamment hydrogène, et en comburant, notamment oxygène et/ou en air, respectivement. La nature du gaz alimentant l'électrode détermine sa fonction. Comme déjà mentionné, le système d'alimentation en gaz est avantageusement nettoyé, de préférence par circulation d'un gaz neutre, avant chaque inversion.

Le système de contrôle permet d'activer l'un ou l'autre des systèmes d'alimentation en gaz. Il s'agit avantageusement de vannes. Au moment de l'inversion de fonctionnement, la position des vannes est permutée ce qui aboutit à une inversion de l'alimentation en gaz de chaque électrode.

Dans la mesure où en sortie, chaque électrode est connectée à un système d'évacuation du surplus de gaz, un système d'évacuation double est également prévu avec un système de contrôle permettant de sélectionner le cheminement de l'évacuation des gaz. Là encore, il s'agit avantageusement de vannes qui sont permutées lors de l'inversion.

De manière privilégié, le système de contrôle de l'alimentation et de la sortie en gaz des électrodes, avantageusement des vannes, est relié à un système de mesure du potentiel de la pile ou de temps de fonctionnement de la pile. Dans ces conditions, la permutation se fait de manière automatique.

### BREVE DESCRIPTION DES FIGURES

La manière dont l'invention peut être réalisée et les avantages qui en découlent ressortiront mieux de l'exemple de réalisation qui suit, donné à titre indicatif et non limitatif, à l'appui des figures annexées parmi lesquelles :
La figure 1 représente le schéma du principe d'une pile à combustible de type PEMFC.
La figure 2 représente le fonctionnement initial d'une pile à combustible de type PEMFC.
La figure 3 représente le fonctionnement d'une pile à combustible de type PEMFC après plusieurs centaines d'heures.
La figure 4 représente le fonctionnement d'une pile à combustible de type PEMFC après inversion des électrodes.
La figure 5 schématise un dispositif selon l'invention doté de vannes selon une première configuration (A) ou une seconde configuration (B).
La figure 6 illustre l'évolution du potentiel de la pile en fonction du temps, dans le cas d'une inversion réalisée lorsque les performances de la pile passent en-dessous d'un seuil prédéterminé.
La figure 7 illustre l'évolution du potentiel de la pile en fonction du temps, dans le cas d'une inversion réalisée lorsque les performances de la pile ont chuté.
La figure 8 illustre l'évolution du potentiel de la pile en fonction du temps, dans le cas d'une inversion répétée dans le temps.
La figure 9 schématise un dispositif selon l'invention doté d'une plateforme rotative selon une première configuration (A) ou une seconde configuration (B).

### MODES DE REALISATION DE L'INVENTION

### 1/ Principe de l'inversion :

Le schéma de fonctionnement initial d'une pile à combustible **1** est illustré à la figure 2. La couche active cathodique **4** est non dégradée. Les particules de carbone sont intactes et les particules de catalyseur sont régulièrement réparties (Fig. 2). Au niveau fonctionnel, il en résulte une bonne résistance de contact et une surface active importante.

Comme illustré à la figure 3, l'endommagement du support carbone à la cathode **4** et l'augmentation de la taille des particules après fonctionnement induisent la perte de surface catalytique et une augmentation de la résistance de contact entre la cathode **4** et la couche de diffusion gazeuse **8**. L'ensemble de ces phénomènes participe à la diminution de la durabilité des PEMFC.

Comme préconisé par l'invention, en inversant le fonctionnement de la pile, l'électrode ayant fonctionné comme anode **3** devient la cathode **4** et l'électrode ayant fonctionné comme cathode **4** devient l'anode **3**. Ainsi et comme il ressort de la figure 4, la couche active de la cathode fortement dégradée est alors remplacée par la couche active de l'anode initiale quasiment intacte.

### 2/ Mise en oeuvre de l'inversion:

### 2-1/Dispositif doté de vannes :

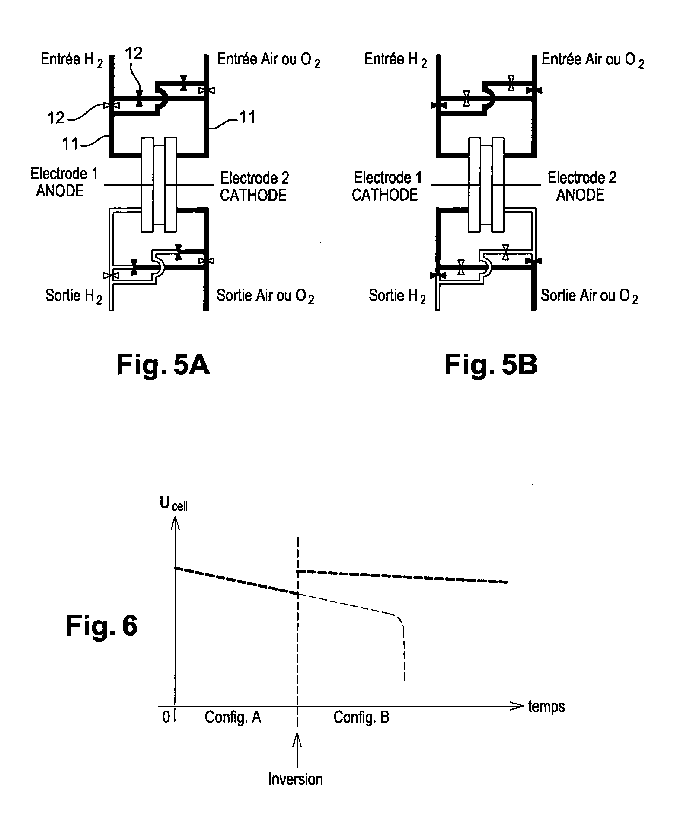

Un tel dispositif est illustré à la figure 5. On constate que chaque électrode est reliée à un système double d'alimentation en gaz **11**, aussi bien en entrée qu'en sortie, équipé de vannes **12**.

Dans la configuration A (Fig. 5A), le système de vannes **12** permet d'introduire l'hydrogène dans l'électrode **1** (alors assimilable à l'anode **3**) et l'air ou l'oxygène dans l'électrode **2** (alors assimilable à la cathode **4**). Le système de vannes à la sortie de la pile permet d'envoyer l'hydrogène dans le réseau prévu pour recueillir les gaz combustible **9** et d'envoyer l'air ou l'oxygène dans le réseau prévu pour recueillir les gaz comburant **10**.

Dans la configuration B (Fig. 5B), les vannes ouvertes dans la configuration A sont fermées et les vannes fermées sont ouvertes. L'hydrogène alimente alors l'électrode **2** (alors assimilable à l'anode **3**) et l'air ou l'oxygène alimente l'électrode **1** (alors assimilable à la cathode **4**). Les vannes à la sortie de la pile sont également commutées pour que l'hydrogène issu de l'électrode **2** puisse être recueilli dans le réseau prévu pour les gaz combustible **9.** De même, l'air ou l'oxygène issu de la pile se dirige dans le réseau prévu pour les gaz comburant **10.**

### 2-1-1/Inversion à un seuil de performances prédéterminé :

Dans cet exemple, la pile est inversée lorsque les performances de la pile ont diminué par exemple de 20 % (Fig. 6). On passe ainsi d'un fonctionnement suivant la configuration A à un fonctionnement suivant la configuration B. La vitesse de la dégradation du potentiel de cellule est diminuée. La durabilité de la pile à combustible est augmentée d'au moins le double par rapport au cas où l'inversion de configuration n'est pas appliquée.

### 2-1-2/ Inversion lors de la chute des performances :

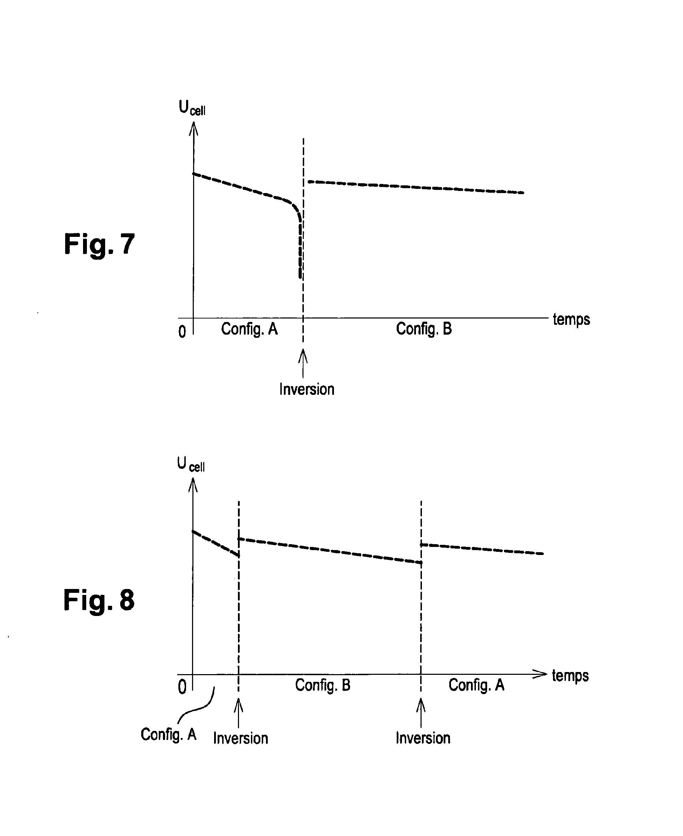

Le passage de la configuration A vers la configuration B est réalisé au moment du collapse de potentiel de cellule issue de la dégradation de sa cathode (Fig. 7). Le potentiel de cellule est augmenté et la vitesse de sa dégradation diminuée.

### 2-1-3/Inversion répétitive :

Le passage de la configuration A vers la configuration B est réalisé de manière répétitive. La vitesse de la dégradation du potentiel de cellule est de plus en plus diminuée (Fig. 8). Dans ce mode fonctionnement, la pile est inversée de manière périodique. L'inversion n'est liée ni à un seuil de performances (voir 2-1-1), ni à une chute brutale des potentiels (voir 2-1-2). La durabilité de la pile à combustible est augmentée d'au moins le double par rapport au cas où la série d'inversions de configuration n'est pas appliquée.

Les trois modes de fonctionnement décrits plus haut peuvent bien entendu être couplés.

### 2-2/ Disoositif doté d'une plateforme rotative :

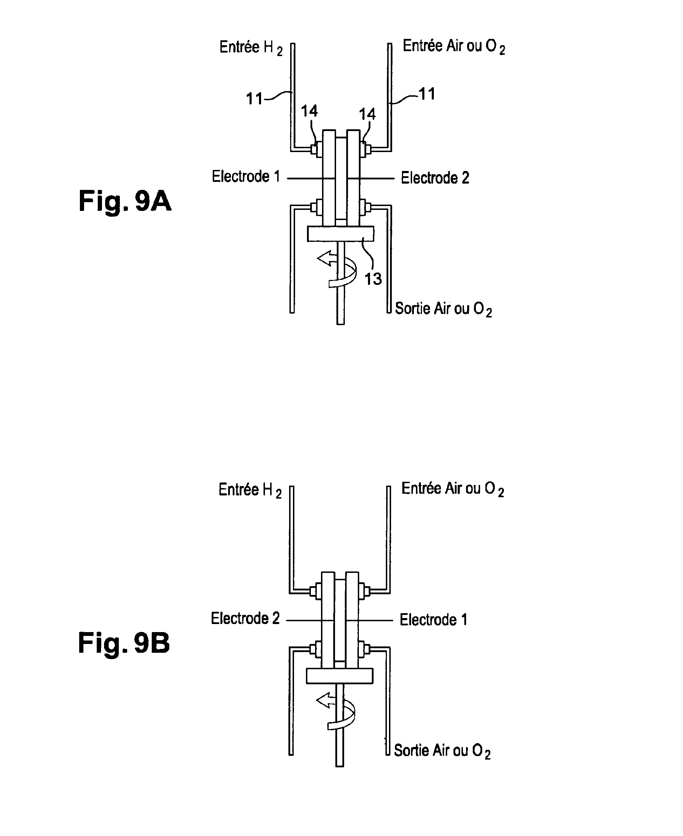

Selon ce mode de réalisation illustré à la figure 9, la pile est supportée sur une plateforme rotative **13** permettant d'inverser l'accès des gaz. Dans ce cas de figure, le circuit de gaz **11** reste en place. C'est la pile qui se déplace, en étant solidaire d'une plate-forme par exemple.

Il faut alors désolidariser la pile de son système d'alimentation **11**, par exemple par l'intermédiaire de raccords rapides **14**. La plate-forme **13** entraîne alors la pile dans un demi-tour (180°C), afm que l'ancienne cathode (électrode 2) se retrouve en position d'anode et que l'ancienne anode (électrode 1) de trouve en position de cathode.

## Revendications

1. Procédé d'utilisation d'une pile à combustible (1) de type PEFMC, composée d'une membrane polymère (2) et d'électrodes (3, 4) présentes d'un côté et de l'autre de la membrane, comprenant les étapes suivantes :
- mesure des performances initiales de la pile ;
- suivi des performances de la pile au cours du temps ;
- inversion des électrodes correspondant à l'anode (3) et à la cathode (4), respectivement, au cours de l'utilisation, lorsqu'un seuil prédéterminé des performances est atteint,
***caractérisé* en ce que** l'inversion des électrodes consiste à :
- échanger physiquement les électrodes (3, 4) ; ou
- échanger l'alimentation en gaz des électrodes (3, 4) grâce à un système d'approvisionnement en comburant et en carburant (11) à chaque électrode (3, 4) ou par rotation de la pile (1) disposée sur une plate-forme rotative (13).

2. Procédé selon la revendication 1, ***caractérisé* en ce que** l'inversion des électrodes (3, 4) est répétée au moins à deux reprises au cours de l'utilisation.

3. Procédé selon la revendication 1 ou 2, ***caractérisé* en ce que** le seuil prédéterminé des performances correspond à une baisse de 20% des performances initiales de la pile.

4. Procédé selon l'une des revendications 1 à 3, ***caractérisé* en ce que** le suivi des performances de la pile au cours du temps est réalisé en continu ou à intervalles de temps prédéterminés.

5. Procédé selon l'une des revendications 1 à 4, ***caractérisé* en ce que**, avant l'inversion des électrodes (3, 4), le système d'alimentation en gaz (11) est nettoyé, avantageusement par passage d'un gaz neutre.

6. Pile à combustible (1) adaptée pour la mise en oeuvre du procédé selon l'une des revendications 1 à 5, ***caractérisée* en ce qu'**elle comprend un système d'approvisionnement en comburant et en carburant (11) à chaque électrode (3, 4).

7. Pile à combustible selon la revendication 6, ***caractérisée* en ce que** le système d'approvisionnement (11) est équipé de vannes (12).

8. Pile à combustible (1) adaptée pour la mise en oeuvre du procédé selon l'une des revendications 1 à 5, ***caractérisée* en ce qu'**elle est disposée sur une plate-forme rotative (13).

9. Pile à combustible selon la revendication 8, ***caractérisée* en ce que** la pile est connectée au système d'approvisionnement en gaz (11) au moyen de raccords rapides (14).

10. Pile à combustible selon l'une des revendications 6 à 9, ***caractérisée* en ce qu'**elle est reliée à un système de mesure du potentiel de la pile.

## Patentansprüche

1. Verfahren für die Verwendung einer Brennstoffzelle (1) des Typs PEFMC, bestehend aus einer Polymermembran (2) und aus beidseitig der Membran angeordneten Elektroden (3, 4), mit folgenden Schritten:
- Messung der ursprünglichen Leistungen der Zelle,
- Beobachtung der Leistungen der Zelle im Zeitverlauf,
- Inversion der der Anode (3) bzw. der Kathode (4) entsprechenden Elektroden während der Verwendung, wenn eine vorgegebene Schwelle der Leistungen erreicht ist,
**dadurch gekennzeichnet, dass** die Inversion der Elektroden darin besteht,
- die Elektroden (3, 4) physisch gegeneinander auszutauschen oder
- die Gasversorgung der Elektroden (3, 4) mittels eines Verbrennungsstoff- und Kraftstoffversorgungssystems (11) an jeder Elektrode (3, 4) oder durch Drehung der auf einer Drehscheibe (13) angeordneten Zelle (1) zu invertieren.

2. Verfahren nach Anspruch 1, **dadurch gekennzeichnet, dass** die Inversion der Elektroden (3, 4) mindestens zwei Mal während der Verwendung wiederholt wird.

3. Verfahren nach Anspruch 1 oder 2, **dadurch gekennzeichnet, dass** die vorgegebene Schwelle der Leistungen einer Senkung der ursprünglichen Leistungen der Zelle um 20 % entspricht.

4. Verfahren nach einem der Ansprüche 1 bis 3, **dadurch gekennzeichnet, dass** die Beobachtung der Leistungen der Zelle im Zeitverlauf kontinuierlich oder in vorgegebenen Zeitabständen erfolgt.

5. Verfahren nach einem der Ansprüche 1 bis 4, **dadurch gekennzeichnet, dass** vor der Inversion der Elektroden (3, 4) das Gasversorgungssystem (11) vorteilhafterweise durch Durchströmung eines Neutralgases gereinigt wird.

6. Brennstoffzelle (1), welche für die Umsetzung des Verfahrens nach einem der Ansprüche 1 bis 5 geeignet ist, **dadurch gekennzeichnet, dass** sie an jeder Elektrode (3, 4) ein Verbrennungsstoff- und Kraftstoffversorgungssystem (11) umfasst.

7. Brennstoffzelle nach Anspruch 6, **dadurch gekennzeichnet, dass** das Versorgungssystem (11) mit Ventilen (12) versehen ist.

8. Brennstoffzelle (1), welche für die Umsetzung des Verfahrens nach einem der Ansprüche 1 bis 5 geeignet ist, **dadurch gekennzeichnet, dass** sie auf einer Drehscheibe (13) angeordnet ist.

9. Brennstoffzelle nach Anspruch 8, **dadurch gekennzeichnet, dass** die Zelle mittels Schnellkupplungen (14) an das Gasversorgungssystem (11) angeschlossen ist.

10. Brennstoffzelle nach einem der Ansprüche 6 bis 9, **dadurch gekennzeichnet, dass** sie mit einem System für die Messung des Zellpotenzials verbunden ist.

## Claims

1. A method for the use of a fuel cell (1) of the PEFMC type, composed of a polymer membrane (2) and electrodes (3, 4) present on either side of the membrane (1), comprising the following steps:
- measuring the initial performance of the cell;
- monitoring the performance of the cell over time;
- reversing the electrodes corresponding to the anode (3) and the cathode (4), respectively, during use, when a predetermined threshold of the performance is reached,
**characterized in that** the reversal of the electrodes consists :
• in physically exchanging the electrodes (3, 4).; or
• in exchanging the gas supply to the electrodes (3, 4) by means of a system for supplying oxidant and fuel (11) to each electrode (3, 4) or by rotation of the cell (1) disposed on a rotary platform (13).

2. The method according to claim 1, **characterised in that** the reversal of the electrodes (3, 4) is repeated on at least two occasions during use.

3. The method according to one of claims 1 and 2, **characterised in that** the predetermined performance threshold corresponds to a drop of 20% in the initial performance of the cell.

4. The method according to one of claims 1 to 3, **characterised in that** the performance of the cell over time is monitored continuously or at predetermined intervals of time.

5. The method according to one of claims 1 to 4, **characterised in that**, before the electrodes (3, 4) are reversed, the gas supply system (11) is cleaned, advantageously by passing a neutral gas.

6. A fuel cell (1) suitable for implementing the method according to one of claims 1 to 5, **characterised in that** it comprises a system for supplying oxidant and fuel (11) to each electrode (3, 4).

7. The fuel cell according to claim 6, **characterised in that** the supply system (11) is equipped with valves (12).

8. A fuel cell (1) suitable for implementing the method according to one of claims 1 to 5, **characterised in that** it is arranged on a rotary platform (13).

9. The fuel cell according to claim 8, **characterised in that** the cell is connected to the gas supply system (11) by means of quick couplings (14).

10. The fuel cell according to one of claims 6 to 9, **characterised in that** it is connected to a system for measuring the potential of the cell.
